# EUROPÄISCHE PATENTSCHRIFT

(11) **EP 4 428 088 B1**
(45) Veröffentlichungstag und Bekanntmachung des Hinweises auf die Patenterteilung: **14.01.2026**
(21) Anmeldenummer: 23209456.5
(22) Anmeldetag: 13.11.2023
(51) Int. Cl.: B66C 23/20

(54) **MOBILE EINSTELLVORRICHTUNG**
MOBILE SETTING DEVICE
DISPOSITIF DE RÉGLAGE MOBILE

(30) Priorität: 06.03.2023 CZ 20230089
(43) Veröffentlichungstag der Anmeldung: 11.09.2024
(73) Patentinhaber: Climalift s.r.o., 742 83 Klimkovice (CZ)
(72) Erfinder: Jablonská, Radmila, 74283 Klimkovice (CZ); Jablonski, Libor, 74283 Klimkovice (CZ)
(74) Vertreter: Jeck, Jonathan

(56) Entgegenhaltungen:
- WO-A1-2021/086195
- CN-U- 218 442 566
- GB-A- 2 603 903
- IT-A1- RM20 110 476

## Beschreibung

Die Erfindung betrifft eine mobile Einstellvorrichtung zur einfachen Handhabung und Installation von Gegenständen, insbesondere Außengeräten von Klimaanlagen und Wärmepumpen.

Bei der technischen Lösung handelt es sich um eine mobile Einstellvorrichtung zur einfachen Handhabung und Installation von Gegenständen, insbesondere von Außenklimageräten und Wärmepumpen.

Aus dem aktuellen Stand der Technik sind Methoden zur Montage von Außengeräten von Klimaanlagen oder Wärmepumpen an Gebäudewänden bekannt. Dabei ist die gängigste Methode der Einsatz klassischer Leitern, bei denen zwei Arbeiter ein durchschnittlich schweres Gerät tragen oder ein Gewicht von ca. 70 kg auf die gewünschte Höhe bringen und zur Befestigung eines bestimmten Gerätes auf der Struktur platzieren. Eine weitere bekannte Möglichkeit, das Gerät zur Befestigung auf der Struktur zu platzieren, ist die Verwendung eines Mobilkrans oder einer Arbeitsplattform.

Aus dem tschechischen Patent Nr. 229 463 5 mit dem Titel Hebezeug, insbesondere für die Montage und Demontage von Lautenventilatoren im Bergbauumfeld, ist eine Lösung bekannt, die aus einem Schienenfahrwerk, einem Rahmen, einer Teleskopführung und einem Hydraulikzylinder besteht. Es ist ferner ein Aggregator vorgesehen, dessen Kern darin besteht, dass der beladene Ventilator ohne Umladung zum Standort transportiert und dann zum Montageort gehoben werden kann.

Der Nachteil dieser Erfindung besteht darin, dass Schienen als Transportweg verwendet werden müssen, was bei der Installation der vorgestellten Lösung an Gebäudewänden völlig ausgeschlossen ist. Darüber hinaus erhöht der Einsatz hydraulischer Elemente das Gewicht des Gerätes deutlich. Das schließt den Einsatz einer entsprechenden Lösung für die erwähnte Installation von Außeneinheiten von Klimaanlagen und Wärmepumpen völlig aus.

Darüber hinaus ist eine Lösung gemäß der tschechischen Erfindungsanmeldung Nr. 2002-90 mit dem Titel Hebevorrichtung einer zweiteiligen Klappvorrichtung bekannt. Diese Klappvorrichtung enthält eine obere Platte, die entlang der horizontalen ersten Achse drehbar an der oberen Platte oder Trennwand des Schranks befestigt ist und eine untere Platte, die entlang der zweiten Achse parallel zur ersten Achse drehbar mit der oberen Platte verbunden ist. Diese Vorrichtung umfasst mindestens einen Hebel mit zwei Armen, der an einer horizontalen Drehachse in der Seite des Schranks drehbar gelagert ist und dessen längerer Arm mit der Bodenplatte verbunden ist. Das Druckfederelement ist an einem Ende drehbar am Gehäusekörper und am anderen Ende drehbar am Hebel befestigt. Der Kontakt der Bodenplatte mit der Schrankoberfläche wird durch die Schrägstellung des Hebels entlang seiner Schwenkachse verhindert. Der kürzere Arm des Hebels wird mittels eines Schlittens oder von Rollen durch eine Führungsschablone geführt, die am Korpus des Schranks befestigt ist. Diese Lösung stellt eine völlig andere technische Lösung als die vorliegende Erfindung dar.

Es gibt auch eine bekannte Lösung gemäß der tschechischen Erfindungsanmeldung Nr. 2004-977 mit dem Titel Hebevorrichtung, die zum Heben von Lasten und Personen bestimmt ist und aus miteinander verbundenen Plattformen besteht. Dabei ist zwischen der unteren Plattform und der oberen Plattform ein Airbag in Einkammer- oder Mehrkammerausführung angeordnet. Diese Lösung stellt eine völlig andere technische Lösung als die vorliegende Erfindung dar.

Es sind auch Vorrichtungen und Verfahren mit hydraulischem Antrieb und Hebelmechanismen bekannt. Deren Nachteil besteht darin, dass eine Stabilisierung auf der Grundplatte, also am Boden, erforderlich ist. Der Arbeiter muss zum Herausziehen des Außengeräts immer eine Leiter benutzen, auf der er die Klimaanlage oder Wärmepumpe und montieren muss.

Es gibt auch weitere bekannte Lösungen, beispielsweise die indische Erfindungsanmeldung Nr. IN 202241073111 mit Namen Hilfsgerät zum Heben von Gegenständen, die indische Erfindungsanmeldung Nr. IN 202211064872 mit Namen Gerät zum Heben von Gegenständen, die indische Erfindungsanmeldung Nr. IN 202211064162 Gerät zum Heben von Gegenständen und die australische Erfindungsanmeldung Nr. AU 2022100125 mit Namen Hebevorrichtungen. Dabei sind alle genannten Lösungen technisch völlig unterschiedlich konzipiert und zielen auf einen anderen Anwendungsbereich ab.

Aus der GB 2 603 903 A ist eine Hebevorrichtung (10) bekannt, bei der das Positionierungsoberteil (12a), das Mittelteil (12b) und das Positionierungsunterteil (12c) zusammen das vertikale Tragelement bilden. An dessen oberem Ende ist eine Halterung (24) mit einer Umlenkrolle (38) angebracht. Diese wird durch eine Strebe (50, 52) abgestützt. Am unteren Ende sorgt eine Stabilisierungsplatte (16) für Wandabstützung. Ein Stabilisierungselement (64') unterstützt die Befestigung an der Tragstruktur.

Die oben genannten Nachteile werden durch die mobile Einstellvorrichtung gemäß der vorliegenden Erfindung beseitigt. Dessen Kern besteht darin, dass es mindestens ein hohles Zentralteil enthält, das auf der Vorderseite mit mindestens einer Strebe ausgestattet ist. Die Strebe ist mindestens ausgestattet mit einem Stabilisierungselement an beiden Enden. **In** das eine Ende des hohlen Mittelteils wird mindestens ein hohles Oberteil und in das andere Ende des hohlen Mittelteils mindestens ein hohles Unterteil eingesetzt. **In** das hohle Unterteil wird mindestens ein Positionierungsunterteil eingesetzt, das auf seiner Rückseite mit mindestens einer Stabilisierungsplatte ausgestattet ist. **In** das hohle Oberteil ist mindestens ein Positionierungsoberteil eingesetzt, das mit mindestens einer senkrecht zur Vorderseite des Positionierungsteils stehenden Halterung ausgestattet ist. Die Halterung ist mit mindestens einer Umlenkrolle ausgestattet.

Zweckmäßig ist es, die Umlenkrolle als Positioniervorrichtung für die Halterung auszubilden und die Halterung zusätzlich mit mindestens einem Verstärkungssturz zu verstärken, um die Festigkeit des oberen Teils der Struktur zu gewährleisten. Vorteilhaft ist es, wenn die Strebe an jedem Ende mit mindestens einem Positionierungselement zur Einstellung der Spannweite der Strebe und außerdem mit zwei Stabilisierungselementen, vorzugsweise zwei an jedem Ende, versehen ist. Dabei ist es zweckmäßig, wenn die Stabilisierungselemente durch eine Druckplatte verbunden werden. Darüber hinaus ist es zweckmäßig, wenn die Strebe an jedem Ende mit mindestens einem Anschlag gegen die Verlängerung des Positionierelements ausgestattet ist.

Zweckmäßig ist es auch, die Stabilisierungsplatte mit Hilfe einer Schraube als Positionierungsplatte in Richtung zum und vom Positionierungsunterteil zu verstellen. Zweckmäßigerweise ist die Länge des Ober- und Unterteils vom hohlen Mittelteil gleich.

Die Erfindung wird nun anhand von Zeichnungen näher erläutert.

Es zeigen:

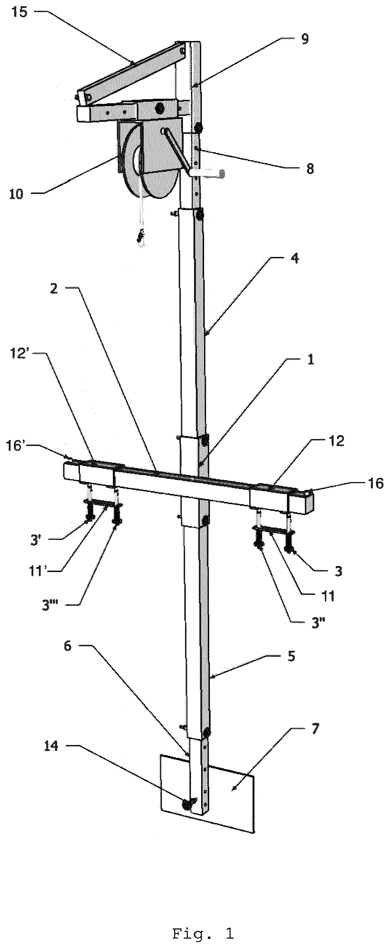

- Fig. 1: eine schematische Darstellung einer mobilen Einstellvorrichtung,

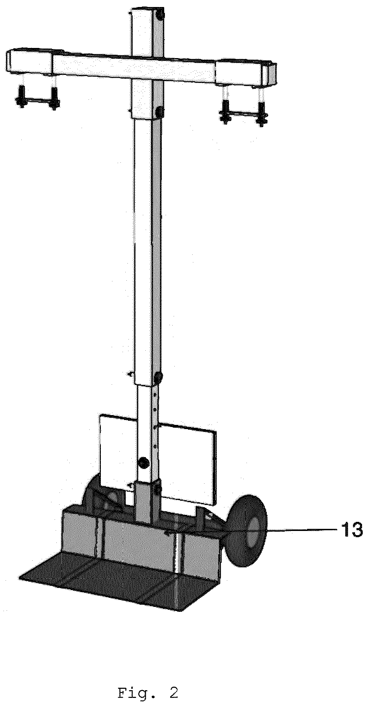

- Fig. 2: die untere Hälfte des mobilen Verlegegeräts, das mit einem Fahrelement für den Einsatz von Estrich ausgestattet ist,

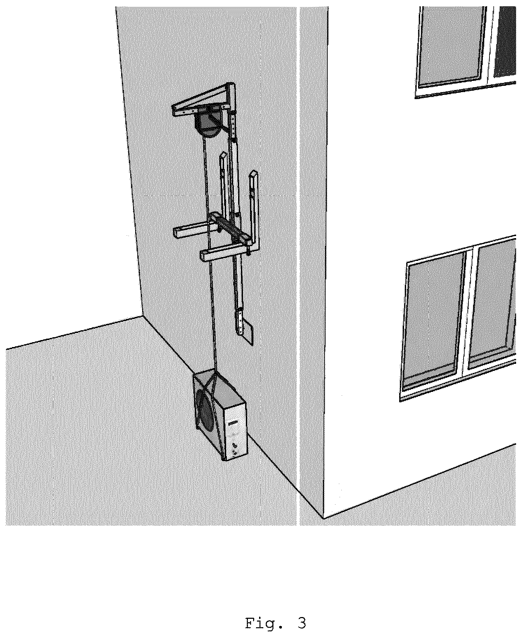

- Fig. 3: eine mobile Einstellvorrichtung, die auf einer Montagekonstruktion montiert ist und an dessen Riemenscheibe ein Außenklimagerät befestigt ist und

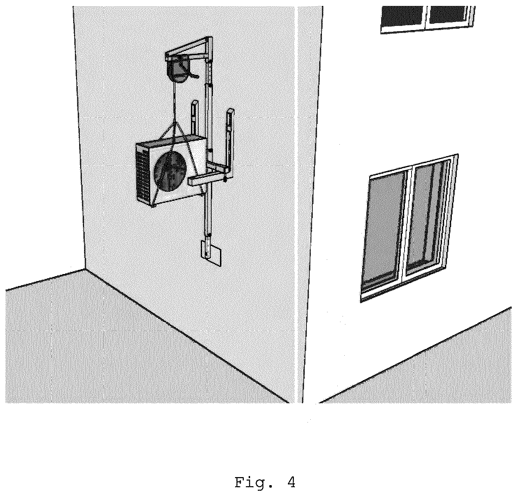

- Fig. 4: das Herausziehen der Außenklimaanlage am Aufbau zur Befestigung.

Die mobile Einstellvorrichtung enthält mindestens ein hohles Mittelteil 1, das auf der Vorderseite mit mindestens einer Strebe 2 versehen ist. Beispielsweise ist die Strebe 2 mit dem hohlen Mittelteil 1 verschweißt. Beide Teile bestehen vorzugsweise aus Leichtmetall, um das Gewicht des Gerätes möglichst gering zu halten.

Die Strebe 2 ist an beiden Enden mit einer Druckplatte 11 versehen, in der sie gelagert ist.

Stabilisierungselemente 3, 3' zur Befestigung des Geräts an der Struktur dienen zur Befestigung beispielsweise einer Außenklimaanlage. **In** der vorteilhaftesten Ausführungsform wird die Druckplatte 11 mittels Schrauben mit dem Kopf 3, 3" und 3',_3" befestigt, die die Druckplatte 11 durchsetzen und unter Einhaltung des Abstands in der Strebe 2 fixiert sind. Das Stabilisierungselement 3 und 3" ist das gleiche wie 3' und 3". Stabilisierungselemente werden beispielsweise als Kopfschrauben dargestellt. Darüber hinaus ist die Strebe 2 in einer vorteilhaften Ausführungsform an jedem Ende mit einem Positionierelement 12, 12' ausgestattet, so dass eine Anpassung der Spannweite der Strebe 2 entsprechend dem Abstand zwischen den Halterungen der zu befestigenden Struktur möglich ist. Haltestellen16, 16' sind an jedem Ende der Strebe 2 gegen die Verlängerung der Positionierelemente 12, 12' platziert.

In das eine Ende des hohlen Mittelteils 1 ist mindestens ein hohles Oberteil 4 eingesteckt, das beispielsweise mittels eines Verriegelungsgriffs gesichert ist, wobei das hohle Oberteil 4 gesichert ist. An seinem Ende ist es mit einem Positionierungsoberteil 8 versehen, wobei die Positionierbarkeit in einer bevorzugten Ausführungsform durch Bohrungen zur Positionierung des arretierbaren Positionier-Klemmgriffs gewährleistet ist. Das Positionierungsoberteil 8 ist mit einer Halterung versehen, die beispielsweise mittels einer Feststellschraube gesichert ist. Die Halterung 9 steht senkrecht zur Vorderseite des Positionierungsoberteils 8. Die Halterung 9 ist mit mindestens einer Umlenkrolle 10 ausgestattet, die auf der Halterung 9 positioniert werden kann und deren Position dann beispielsweise mittels einer Positionierungsklemme gesichert wird.

Die Seilrolle 10 ist als Standardrolle mit einem mit einem Haken ausgestatteten Wickelseil dargestellt. In einer bevorzugten Ausführungsform ist sie mit einer automatischen Bremse ausgestattet.

Um die Festigkeit der Halterung 9 zu gewährleisten, wenn beispielsweise ein Außengerät einer Klimaanlage an der Seilrolle 10 aufgehängt wird, ist die mobile Einstellvorrichtung mit einem Verstärkungssturz 15 versehen, der in einer vorteilhaften Ausführungsform mit der Halterung 9 verbunden ist auf eine abnehmbare Art und Weise. In das andere Ende des hohlen Mittelteils 1 ist mindestens ein hohles Unterteil 5 eingesteckt, welches an einem Ende mit einem Positionierungsunterteil 6 versehen ist. Dabei ist die Positionierbarkeit in einer bevorzugten Ausführungsform durch Bohrungen zur Positionierung des arretierbaren Positionierklemmgriffs gewährleistet. Das Positionierungsunterteil 6, dessen Position beispielsweise durch eine Feststellschraube gesichert ist, ist auf seiner Rückseite mit mindestens einer Stabilisierungsplatte 7 ausgestattet. Die Position der Stabilisierungsplatte 7 im Verhältnis zum Positionierungsunterteil 6 ist verstellbar, sodass die Stabilisierungsplatte 7 gegen die Wand drückt, an der das Gerät montiert ist.

Die Baubarkeit wird in der vorteilhaftesten Ausführungsform durch die Schraube 14 ermöglicht, die vorzugsweise mit einer Flügelmutter ausgestattet ist.

In einer vorteilhaften Ausführungsform kann das freie Ende des Positionierungsunterteils 6 mit einem Laufelement 13 versehen sein, das beispielsweise mittels einer Feststellschraube am Positionierungsunterteil 6 befestigt wird.

### Beispielhafte Ausführungsform der Erfindung

Als Beispiel wird die Installation einer Außenklimaanlage mit einem Gewicht von ca. 70 kg an der Befestigungskonstruktion beschrieben, die in einer Höhe zum Beispiel von 5 m an der Hauswand befestigt wird.

Die mobile Einstellvorrichtung ist in seiner Standardbaugruppe in Grundteile unterteilt: ein hohles Mittelteil 1, das eine Strebe 2 enthält, ein hohles oberes Teil zusammen mit einem Positionierungsoberteil 8 und einer Halterung 9 mit einer Riemenscheibe 10 und einem hohlen Unterteil. Teil 5 enthält ein Positionierungsunterteil 6 mit der Stabilisierungsplatte 7 und das separate Fahrelement 13.

Beispielsweise wird das hohle Mittelteil 1 mittels einer Feststellschraube mit dem hohlen Unterteil 5, das das Positionierungsunterteil 6 enthält, mit der Stabilisierungsplatte 7 verbunden. Dabei wird auf das freie Ende des Positionierungsunterteils ein Laufelement 13 aufgesetzt, das mit einer Sicherungsschraube gesichert ist. Auf diese Weise entsteht ein mobiles Transportgerät, auf dem beispielsweise ein Außenklimagerät platziert und dieses somit problemlos zum Installationsort transportiert werden kann.

Vor Ort wird das Außenklimagerät beispielsweise auf dem Boden unter dem Rahmen gelagert und das Fahrelement 13 demontiert. Auf das hohle Mittelteil 1 ist ein hohles Oberteil 4 mit einem Positionierungsoberteil 8 und einer Halterung 9 mit einer Umlenkrolle 10 aufgesetzt, das beispielsweise durch eine Feststellschraube gesichert ist. Die einzelnen Teile werden mit Positionierklammern aneinander befestigt. Das so aufgebaute mobile Hebegerät wird eingesetzt auf der Struktur zur Montage der Außenklimaanlage. Entsprechend dem Abstand der Halterungen der zu befestigenden Struktur wird die Spannweite der Strebe 2 über die Positionierelemente 12, 12' eingestellt und anschließend mit Hilfe der Stabilisierungselemente 3, 3" und 3' gesichert. Die Druckplatte 11 ist an den Halterungen der Struktur zur Befestigung von Außenklimaanlagen positioniert. Die Lagefixierung der mobilen Einstellvorrichtung gegen Umkippen erfolgt mittels einer Stabilisierungsplatte 7, die mittels einer Schraube 14 mit einer Flügelmutter zum einfachen Anziehen an die Gebäudewand gedrückt wird.

In der vorteilhaftesten Ausführungsform ist die Länge des Ober- und Unterteils vom hohlen Mittelteil 1 gleich.

Am Haken der Seilrolle 10 der so fixierten mobilen Einstellvorrichtung wird mittels Gurten ein Außenklimagerät aufgehängt, das am Baukörper zur Befestigung angehoben wird. Nach Abschluss der Montage ist die Außenklimaanlage fest angebracht Auf der Struktur zur Befestigung wird das mobile Einstellvorrichtung in umgekehrter Reihenfolge wie beim Zusammenbau demontiert.

Mobile Einstellvorrichtungen können für jegliche Installation von Außengeräten von Klimaanlagen oder Wärmepumpen ohne weitere Eingriffe in die Gebäudewand und anschließend auch für den Transport der installierten Geräte vom Transportmittel zum Installationsort eingesetzt werden.

Die mobile Einstellvorrichtung gemäß dieser Erfindung kann für die Installation von Außengeräten von Klimaanlagen und Wärmepumpen verwendet werden. Dabei ist eine sichere und körperlich anspruchslose Montage auch durch nur einen Arbeiter gewährleistet, ohne dass ein zusätzlicher Eingriff in die Gebäudewand erforderlich ist. Das Gerät ist installiert.

### Bezugszeichenliste

1 hohles Mittelstück
2 Streben
3 Stabilisierungselement
4 hohles Oberteil
5 hohles Unterteil
6 Positionierungsunterteil
7 Stabilisatorplatte
8 Positionierungsoberteil
9 Konsolen, Halterung
10 Riemenscheibe
11 Druckplatte
12 Positionierungselement
13 Lauf-, Fahrelement
14 Schraube mit Flügelmutter
15 verstärkende Übersetzung
16 Haltestelle

## Patentansprüche

1. Einstellvorrichtung,
die mindestens ein hohles Mittelteil (1) enthält, das an der Vorderseite mit mindestens einer Strebe (2) ausgestattet ist, während die Strebe (2) an beiden Enden mit einem Stabilisierungselement (3, 3') ausgestattet ist,
wobei
ferner in ein Ende des hohlen Mittelteils (1) mindestens ein hohles Oberteil (4) und in das andere Ende mindestens ein hohles Unterteil (5) eingesetzt sind, wobe**i** das hohle Unterteil (5) mindestens ein Positionierungsunterteil (6) eingesetzt ist, das auf seiner Rückseite mit mindestens einer Stabilisierungsplatte (7) ausgestattet ist, wobei
in das hohle Oberteil (4) mindestens ein Positionierungsoberteil (8) eingesetzt ist, das mit mindestens einer Halterung (9) versehen ist, die senkrecht zur Vorderseite des Positionierungsoberteils (8) steht, während die Halterung (9) mit mindestens einer Umlenkrolle (10) ausgestattet ist.

2. Einstellvorrichtung nach Anspruch 1,
**dadurch gekennzeichnet,**
**dass** die Umlenkrolle (10) als Positioniervorrichtung an der Halterung (9) angeordnet ist.

3. Einstellvorrichtung nach Anspruch 1 oder 2,
**dadurch gekennzeichnet,**
**dass** die Strebe (2) an jedem Ende mit mindestens einer Druckplatte (11, 11') versehen ist, in der Stabilisierungselemente (3, 3', 3') platziert sind.

4. Einstellvorrichtung nach einem der Ansprüche 1 bis 3,
**dadurch gekennzeichnet,**
**dass** der Abstand der Stabilisierungselemente (3) und (3") gleich ist wie zwischen (3') und (3").

5. Einstellvorrichtung nach einem der Ansprüche 1 bis 4,
**dadurch gekennzeichnet,**
**dass** die Strebe (2) an jedem Ende mit zwei Positionierelementen (12, 12') zur Größenverstellung der Strebe (2) versehen ist.

6. Einstellvorrichtung nach einem der Ansprüche 1 bis 5,
**dadurch gekennzeichnet,**
**dass** die Strebe (2) an jedem Ende mit mindestens einem Anschlag (16, 16') gegen die Verlängerung des Positionierelements (12, 12') versehen ist.

7. Einstellvorrichtung nach einem der Ansprüche 1 bis 6,
**dadurch gekennzeichnet,**
**dass** das Positionierunterteil (6) mit mindestens einem Fahrelement (13) versehen ist.

8. Einstellvorrichtung nach einem der Ansprüche 1 bis 7,
**dadurch gekennzeichnet,**
**dass** die Stabilisierungsplatte (7) mittels einer Schraube (14) in Richtung zum und vom Positionierungsunterteil (6) positionierbar ist.

9. Einstellvorrichtung nach einem der Ansprüche 1 bis 8,
**dadurch gekennzeichnet,**
**dass** die Strebe (2) mit mindestens einem Verstärkungssturz (15) versehen ist.

10. Einstellvorrichtung nach einem der Ansprüche 1 bis 9,
**dadurch gekennzeichnet,**
**dass** die Länge des Ober- und Unterteils vom hohlen Mittelteil (1) gleich ist.

## Claims

1. Positioning device,
which contains at least one hollow middle part (1) that is equipped on the front side with at least one strut (2), while the strut (2) is equipped at both ends with a stabilization element (3, 3'),
wherein furthermore at least one hollow upper part (4) is inserted into one end of the hollow middle part (1) and at least one hollow lower part (5) into the other end, wherein at least one positioning lower part (6) is inserted into the hollow lower part (5), which is equipped on its rear side with at least one stabilization plate (7), wherein at least one positioning upper part (8) is inserted into the hollow upper part (4), which is provided with at least one bracket (9) that stands perpendicular to the front side of the positioning upper part (8), while the bracket (9) is equipped with at least one deflection pulley (10).

2. Positioning device according to claim 1,
**characterized in that**
the deflection pulley (10) is arranged as a positioning device on the bracket (9).

3. Positioning device according to claim 1 or 2,
**characterized in that**
the strut (2) is provided at each end with at least one pressure plate (11, 11') in which stabilization elements (3, 3', 3") are placed.

4. Positioning device according to any one of claims 1 to 3,
**characterized in that**
the distance between the stabilization elements (3) and (3") is equal to that between (3') and (3").

5. Positioning device according to any one of claims 1 to 4,
**characterized in that**
the strut (2) is provided at each end with two positioning elements (12, 12') for size adjustment of the strut (2).

6. Positioning device according to any one of claims 1 to 5,
**characterized in that**
the strut (2) is provided at each end with at least one stop (16, 16') against the extension of the positioning element (12, 12').

7. Positioning device according to any one of claims 1 to 6,
**characterized in that**
the positioning lower part (6) is provided with at least one running element (13).

8. Positioning device according to any one of claims 1 to 7,
**characterized in that**
the stabilization plate (7) can be positioned toward and away from the positioning lower part (6) by means of a screw (14).

9. Positioning device according to any one of claims 1 to 8,
**characterized in that**
the strut (2) is provided with at least one reinforcing lintel (15).

10. Positioning device according to any one of claims 1 to 9,
**characterized in that**
the length of the upper and lower parts from the hollow middle part (1) is equal.

## Revendications

1. Dispositif de positionnement,
qui contient au moins une partie médiane creuse (1) qui est équipée sur la face avant d'au moins un étai (2), tandis que l'étai (2) est équipé aux deux extrémités d'un élément de stabilisation (3, 3'),
dans lequel en outre au moins une partie supérieure creuse (4) est insérée dans une extrémité de la partie médiane creuse (1) et au moins une partie inférieure creuse (5) dans l'autre extrémité, dans lequel au moins une partie inférieure de positionnement (6) est insérée dans la partie inférieure creuse (5), qui est équipée sur sa face arrière d'au moins une plaque de stabilisation (7), dans lequel au moins une partie supérieure de positionnement (8) est insérée dans la partie supérieure creuse (4), qui est pourvue d'au moins un support (9) qui se dresse perpendiculairement à la face avant de la partie supérieure de positionnement (8), tandis que le support (9) est équipé d'au moins une poulie de renvoi (10).

2. Dispositif de positionnement selon la revendication 1,
**caractérisé en ce que**
la poulie de renvoi (10) est disposée comme dispositif de positionnement sur le support (9).

3. Dispositif de positionnement selon la revendication 1 ou 2,
**caractérisé en ce que**
l'étai (2) est pourvu à chaque extrémité d'au moins une plaque de pression (11, 11') dans laquelle sont placés des éléments de stabilisation (3, 3', 3").

4. Dispositif de positionnement selon l'une quelconque des revendications 1 à 3, **caractérisé en ce que**
la distance entre les éléments de stabilisation (3) et (3") est égale à celle entre (3') et (3").

5. Dispositif de positionnement selon l'une quelconque des revendications 1 à 4, **caractérisé en ce que**
l'étai (2) est pourvu à chaque extrémité de deux éléments de positionnement (12, 12') pour l'ajustement de taille de l'étai (2).

6. Dispositif de positionnement selon l'une quelconque des revendications 1 à 5, **caractérisé en ce que**
l'étai (2) est pourvu à chaque extrémité d'au moins une butée (16, 16') contre l'extension de l'élément de positionnement (12, 12').

7. Dispositif de positionnement selon l'une quelconque des revendications 1 à 6, **caractérisé en ce que**
la partie inférieure de positionnement (6) est pourvue d'au moins un élément de roulement (13).

8. Dispositif de positionnement selon l'une quelconque des revendications 1 à 7, **caractérisé en ce que**
la plaque de stabilisation (7) peut être positionnée vers et à l'écart de la partie inférieure de positionnement (6) au moyen d'une vis (14).

9. Dispositif de positionnement selon l'une quelconque des revendications 1 à 8, **caractérisé en ce que**
l'étai (2) est pourvu d'au moins un linteau de renforcement (15).

10. Dispositif de positionnement selon l'une quelconque des revendications 1 à 9, **caractérisé en ce que**
la longueur des parties supérieure et inférieure de la partie médiane creuse (1) est égale.
